# FASCICULE DE BREVET EUROPEEN

(11) **EP 1 872 697 B1**
(45) Date de publication et mention de la délivrance du brevet: **06.01.2016**
(21) Numéro de dépôt: 07356088.0
(22) Date de dépôt: 25.06.2007
(51) Int. Cl.: A47J 31/40

(54) **Distributeur de produit pulverulent à réservoir amovible**
Pulverisierender Produktverteiler mit abnehmbarem Behälter
Powdery product dispenser with removable reservoirs

(30) Priorité: 26.06.2006 FR 0605700
(43) Date de publication de la demande: 02.01.2008
(73) Titulaire: SEB SA, 69130 Ecully (FR)
(72) Inventeur: Morin, Gilles, 14210 Sainte Honorine du Fay (FR); Mih, Séverine, 53100 Mayenne (FR)
(74) Mandataire: Kiehl, Hubert

(56) Documents cités:
- EP-A2- 0 516 168
- WO-A-2004/098361
- GB-A- 2 364 994
- US-A1- 2005 230 343

## Description

La présente invention est relative à un dispositif distributeur de produit pulvérulent comprenant un réservoir amovible pour un produit alimentaire pulvérulent d'infusion ou de percolation, tels le café moulu, le thé, le chocolat, etc. et susceptible d'être utilisé avec un appareil de préparation et de distribution de boissons.

Un appareil de préparation et de distribution de boissons chaudes, par exemple à partir de café moulu, comprend généralement un réservoir d'eau froide, une pompe électrique, une chaudière et une tête d'infusion apte à recevoir une certaine quantité de café moulu en vue de lui injecter une quantité prédéterminée d'eau chaude en provenance de la chaudière, la boisson obtenue étant ensuite orientée vers un récipient collecteur. En fin de cycle d'infusion, la tête d'infusion doit être ouverte afin de pouvoir y introduire une nouvelle dose de café moulu après avoir évacué le reste de produit précédemment infusé. Le café moulu est acheminé dans la chambre d'infusion à partir d'un distributeur de produit pulvérulent. Ces appareils nécessitent un remplissage régulier du réservoir du distributeur, manoeuvre qui sollicite du temps et beaucoup d'attention de la part de l'utilisateur, surtout lorsque l'accès au réservoir se fait dans un petit espace.

Pour pallier ces inconvénients, une solution a été décrite dans le document FR 2 713 906 portant sur un distributeur de mouture pour une machine à café automatique où le réservoir de mouture est positionné de manière amovible dans un siège correspondant réalisé dans le boîtier de la machine. Le réservoir de mouture comporte des pales de dosage entraînées en rotation par un moteur électrique du boîtier, l'ouverture de distribution étant obturée par l'arrêt en position déterminée des pales de dosage ayant des dimensions correspondant à celles de l'ouverture de distribution qu'elle bordent. Le réservoir est maintenu en place dans un siège à l'intérieur du boîtier de la machine par un système de fixation à baïonnette. Un tel système de fixation ne convient pas à une mise en place du réservoir dans un logement de réception profonde de boîtier et présente également l'inconvénient d'imposer un mouvement de rotation du réservoir, ce qui n'est pas toujours commode à réaliser avec un réservoir bien rempli.

Une autre solution a été décrite dans le document US 5 341 961 où le distributeur comporte un réservoir de café moulu monté amovible par rapport à un dispositif doseur. Le réservoir est maintenu en place à l'intérieur du distributeur par un doigt de fixation à ressort traversant le boîtier du distributeur et prenant appui dans un verrou réalisé sur une paroi latérale du réservoir. L'utilisateur doit saisir l'extrémité du doigt et tirer latéralement pour comprimer son ressort afin de permettre la mise en place du réservoir dans son logement, la même manipulation du doigt étant nécessaire lorsque l'on veut extraire le réservoir. Cette solution est, certes, de réalisation simplifiée et convient à un simple dispositif doseur manuel, mais elle présente l'inconvénient de ne donner aucune information quant à l'installation correcte du réservoir à l'intérieur du distributeur, la mauvaise mise en place du réservoir pouvant provoquer des dysfonctionnements du distributeur. Elle présente par ailleurs l'inconvénient d'une manipulation peu aisée pour l'utilisateur qui doit, d'une main, tirer latéralement sur le doigt de verrouillage alors qu'avec l'autre, il doit simultanément manipuler le réservoir, tout en essayant de trouver la bonne orientation de ce dernier.

Le document EP 1 453 018 décrit une machine apte à distribuer des boissons à partir d'un distributeur de produit fluide contenu dans un réservoir amovible. Le réservoir est mis en place, puis verrouillé sur une plaque coulissante horizontalement sur le distributeur, la plaque étant munie d'une fenêtre de réception d'une ouverture de récipient. Ce réservoir amovible s'avère d'une manipulation peu aisée, l'utilisateur devant le visser à fond pour s'assurer de la mise en place correcte des deux réservoirs côte-à-côte à l'intérieur de la machine.

Le document EP 0 516 168 décrit un distributeur automatique de boissons préparées à partir d'un dispositif d'alimentation en matériau pulvérulent contenu dans des unités de stockage montées amovibles dans des supports à l'intérieur du distributeur. Chaque unité de stockage comporte une vis de dosage pour distribuer le produit pulvérulent à travers un orifice de distribution, la vis comportant une extrémité de couplage avec un moteur situé à l'extérieur de son support. Pour son montage dans le support, chaque unité de stockage comporte en sa partie inférieure des protubérances coopérant avec des fentes de son support. Des interrupteurs détectent la mise en place de chaque unité lorsqu'elle est verrouillée par rapport à son support. Toutefois, le montage d'une telle unité l'unité de stockage dans le distributeur est difficile à réaliser, car déjà, on doit démonter une partie du boîtier pour avoir accès à son support. Puis, pour permettre son entraînement par le moteur, le couplage de l'unité de stockage doit être aligné avec l'axe du moteur, l'unité de stockage étant ensuite glissée horizontalement dans son support jusqu'à l'enclenchement.

Le but de l'invention est de remédier aux inconvénients précités et de proposer un distributeur de produit pulvérulent ayant un réservoir amovible qui soit d'une installation facile et sécuritaire à l'intérieur du distributeur, tout en étant facile d'accès et pouvant être retiré aisément du distributeur.

Un autre objectif de l'invention est de proposer un dispositif de sécurité pour empêcher le fonctionnement d'un distributeur si le réservoir amovible de produit pulvérulent n'est pas correctement mis en place, tout en étant bloqué en position de fonctionnement, permettant une construction simple et économique, et étant fiable en fonctionnement.

Un autre but de l'invention est un distributeur de produit pulvérulent à réservoir amovible apte à être monté, verrouillé et ensuite déverrouillé facilement par rapport à son logement au sein du distributeur, sans imposer de contrainte constructive à l'ensemble du distributeur.

Ces buts sont atteints avec un distributeur de produit pulvérulent comportant un boîtier, un réservoir monté amovible dans un logement réalisé dans le boîtier, ledit réservoir contenant le produit pulvérulent et ayant un orifice de distribution, du fait qu'il comprend des moyens de verrouillage associés à des moyens de confirmation du réservoir correctement mis en place par translation verticale à l'intérieur d'un logement ouvert du boîtier, les moyens de confirmation actionnant un interrupteur de commande du fonctionnement.

Le distributeur de l'invention présente donc un réservoir amovible apte à coopérer avec des moyens de verrouillage pour le fixer en position lorsqu'il est mis en place dans un logement prévu à cet effet à l'intérieur de son boîtier. Le boîtier présente un logement ouvert, on comprend qu'il est ouvert à son extrémité supérieure et fermé à son extrémité inférieure qui forme support pour le réservoir, ce logement étant ainsi directement accessible depuis l'extérieur pour recevoir le réservoir amovible. La mise en place du réservoir dans son logement se fait avantageusement par une translation verticale vers le bas, ceci nécessitant déjà un effort moindre de la part de l'utilisateur, le réservoir prenant sa place naturellement, par simple descente dans le logement sous l'effet de son poids, en l'introduisant par l'extrémité ouverte du logement du boîtier.

Selon l'invention également, les moyens de verrouillage sont en relation avec des moyens de confirmation de la mise en place correcte du réservoir dans son logement à l'intérieur du distributeur, ces moyens comportant un interrupteur de commande du fonctionnement du distributeur lorsqu'il détecte la présence du réservoir correctement positionné et fixé dans son logement à l'intérieur du boîtier. Ces moyens de confirmation sont de préférence des moyens de contrôle reliés à une commande de démarrage du distributeur.

Lorsqu'il arrive en fin de course de descente verticale au fond du logement, le réservoir est automatiquement verrouillé et l'information de sa mise en place correcte est transmise par un interrupteur aux moyens de contrôle du distributeur. Ainsi, le réservoir amovible du distributeur de l'invention est avantageusement installé et bloqué en position lors de sa mise en place dans son logement à l'intérieur du boîtier, le fonctionnement en bonnes conditions du distributeur étant assuré par une détection de présence du réservoir correctement mis en place et maintenu dans cette position à l'intérieur du distributeur.

De préférence, les moyens de verrouillage sont des moyens à enclenchement automatique coopérant avec des éléments de forme situés sur le côté du réservoir.

De tels moyens de verrouillage à enclenchement automatique permettent déjà une installation rapide du réservoir dans le boîtier du distributeur, la fixation s'effectuant à la fin de la course de descente du réservoir dans le boîtier du distributeur, sans manipulation supplémentaire de la part de l'utilisateur. Des éléments de forme agencés sur le côté du réservoir permettent de dégager le fond du logement pour plus de compacité en direction verticale et/ou pour permettre l'agencement de moyens d'entraînement par le bas d'un outil travaillant à l'intérieur du réservoir.

Avantageusement, le distributeur comprend des moyens de déverrouillage actionnés depuis l'extérieur du boîtier.

Ceci assure un bon confort en utilisation, le réservoir amovible étant déjà accessible depuis l'extérieur du boîtier, une action de déverrouillage exercée également depuis l'extérieur du boîtier, de préférence d'un même côté que celui recevant le réservoir amovible, permettant de débloquer le réservoir avec une main et d'extraire le réservoir avec l'autre main.

De préférence, les moyens de verrouillage comportent au moins un crochet et le réservoir comporte au moins un élément de forme à enclenchement rapide venant en prise avec le crochet qui bloque le réservoir lors de sa mise en place dans le logement, et le crochet est rendu inactif par actionnement d'un levier externe.

Un tel élément de forme à enclenchement rapide peut être, par exemple une protubérance ou un creux réalisé sur la surface externe du réservoir, venant en prise automatiquement avec un crochet de verrouillage lors de l'insertion du réservoir dans son logement à l'intérieur du boîtier. Le crochet fixe donc automatiquement le réservoir à l'intérieur du boîtier du distributeur, la mise en place et le verrouillage étant alors réalisés intuitivement par l'utilisateur, ce qui convient plus particulièrement à des logements profonds ou ayant des dispositifs de verrouillage masqués par le boîtier et non visibles depuis l'extérieur.

Selon l'invention également, le déverrouillage s'effectue par une action de commande de l'utilisateur sur un levier externe permettant ainsi de désactiver, par un simple appui depuis l'extérieur, le crochet de verrouillage situé à l'intérieur du boîtier du distributeur. Un tel dispositif de verrouillage agencé dans le boîtier du distributeur présente l'avantage d'être très compact, de fonctionnement simplifié et fiable, tout en étant protégé par le boîtier du distributeur.

Avantageusement, le réservoir est mis en place par translation verticale à l'intérieur du logement ouvert en la partie supérieure du boîtier et le levier externe est agencé proche du réservoir du même côté du boîtier.

La mise en place du réservoir à l'intérieur de son logement dans le boîtier se fait par une translation verticale vers le bas, ce qui nécessite un effort moindre de la part de l'utilisateur, le réservoir prenant sa place naturellement par simple descente dans le logement sous l'effet de son poids. Cette solution permet d'améliorer l'ergonomie de l'opération de déverrouillage, l'utilisateur pouvant mieux coordonner ses mouvements d'extraction du réservoir et d'appui sur le levier de commande, sans qu'il soit gêné par les autres parties du distributeur ou de son support.

De préférence, l'élément de forme à enclenchement rapide est une protubérance comportant une paroi latérale saillante par rapport à la surface latérale du réservoir délimitée entre une extrémité inférieure d'insertion et une extrémité supérieure d'appui et le verrouillage s'effectue sous la poussée d'un moyen de rappel élastique.

Lors de la descente du réservoir, l'extrémité d'insertion de la protubérance latérale vient la première au contact du crochet qui est poussé par la protubérance d'insertion réalisée avantageusement avec un rayon de courbure ou un chanfrein facilitant le mouvement du crochet. Le crochet longe ensuite la paroi latérale de la protubérance lors du mouvement vertical d'insertion du réservoir pour venir finalement s'installer sur l'extrémité d'appui où il est maintenu en position verrouillée par la poussée du ressort de rappel. La protubérance joue ainsi le rôle d'une came de guidage du crochet dans son mouvement d'écartement lors de l'introduction jusqu'au verrouillage du réservoir.

Avantageusement, le crochet est supporté en pivotement autour d'un axe horizontal.

Un mouvement de pivotement du crochet de verrouillage est préféré dans la réalisation de l'invention car on obtient une bonne amplitude du mouvement de sortie pour une faible amplitude à l'entrée.

De préférence, le crochet coopère avec l'extrémité supérieure d'appui de la protubérance et se prolonge par un bras horizontal comportant une extrémité à renvoi vertical.

Le bras horizontal du crochet pivote autour d'un axe perpendiculaire à la direction de déplacement du réservoir, le renvoi vertical de celui-ci permettant de l'actionner facilement par un simple appui vertical depuis la partie supérieure du boîtier.

Avantageusement, le réservoir comporte deux protubérances diamétralement opposées coopérant avec deux crochets dont les bras horizontaux sont reliés ensemble et comportent un renvoi vertical commun.

Cette solution permet une meilleure fixation du réservoir, qui est ainsi maintenu des deux côtés, tout en étant d'un actionnement simplifié grâce au renvoi commun des deux crochets.

Avantageusement, l'extrémité du renvoi vertical est reliée à une pédale d'éjection montée pivotante autour d'un axe horizontal situé en la partie supérieure du boîtier.

Dans une variante, le déverrouillage du crochet est effectué par un appui exercé directement sur le renvoi vertical. Dans une autre réalisation à montage simplifié, on relie le renvoi vertical à une pédale d'éjection montée pivotante autour d'un axe horizontal en la partie supérieure du boîtier en étant actionnée en position neutre par un ressort de rappel (ressort de rappel qui maintient alors le levier en position de verrouillage).

De préférence, le réservoir comporte des moyens d'indexation en position par rapport au logement du boîtier.

Ceci facilite la mise en place par l'utilisateur du réservoir dans son logement et garantit en même temps le positionnement correct du réservoir, condition nécessaire au bon fonctionnement du distributeur.

Avantageusement, les moyens de confirmation comportent une tige portée par le réservoir venant actionner un interrupteur de commande du fonctionnement.

Une telle tige comporte une extrémité saillante venant fermer les contacts d'un micro-interrupteur pour réaliser cette opération et permettre le déclenchement d'une alarme et/ou d'un affichage d'information en direction de l'utilisateur du distributeur. La tige peut être agencée sur la surface latérale du réservoir ou sur la surface de fond de ce dernier.

Dans une variante avantageuse de réalisation de l'invention, le distributeur comporte un dispositif d'éjection du réservoir.

Un tel dispositif d'éjection permet d'extraire plus facilement le réservoir de son logement à l'intérieur du distributeur.

Avantageusement, le dispositif d'éjection comprend au moins un pion d'éjection monté à ressort de rappel au fond du logement du boîtier et venant au contact du fond du réservoir lorsque ce dernier est mis en place dans le boîtier.

La mise en place du réservoir dans son logement se fait donc en enfonçant le pion et en comprimant son ressort, le réservoir étant ensuite bloqué en cette position par le dispositif de verrouillage. Lors du déverrouillage, le ressort de rappel du pion d'éjection se détend en poussant le réservoir vers le haut qui devient alors saillant par rapport à son logement pouvant ainsi mieux être saisi par l'utilisateur en vue de son extraction.

De préférence, ledit pion d'éjection agit sur un interrupteur de commande du fonctionnement.

Ceci simplifie la construction du réservoir, le pion appartenant au boîtier du distributeur et assurant ainsi la confirmation de la présence du réservoir correctement mis en place dans le logement.

Dans une variante de réalisation de l'invention, le réservoir contient de la mouture de café et le distributeur comporte des moyens de dosage permettant de délivrer des quantités définies de café moulu.

Dans une autre variante de réalisation de l'invention, le réservoir contient des grains de café et la machine à café comporte des moyens permettant le broyage desdits grains et la délivrance de la mouture.

Le distributeur à réservoir amovible de l'invention peut donc être employé avec des réservoirs contenant de la mouture ou des grains de café, indifféremment, donc avec différentes catégories de machines.

Le distributeur à réservoir amovible de l'invention trouve avantageusement son application dans une machine automatique de préparation des boissons. Une telle machine automatique comporte des moyens de fourniture d'une quantité prédéterminée de fluide à l'intérieur d'une chambre d'infusion recevant le produit pulvérulent délivré par le distributeur de l'invention, ainsi que des moyens permettant l'évacuation du produit d'infusion à l'extérieur de la chambre d'infusion en direction d'un récipient collecteur. Le distributeur de l'invention permet un fonctionnement sécuritaire de la machine à café en transmettant une information de présence du réservoir amovible dans la machine en sa position verrouillée, ainsi qu'une information d'absence du réservoir, tout en permettant à la machine de produire plusieurs types de boissons à partir de réservoirs amovibles interchangeables.

L'invention sera mieux comprise à l'étude des modes de réalisation pris à titre nullement limitatif et illustrés dans les figures annexées dans lesquelles :
- la figure 1 est une vue générale d'une machine à café espresso contenant le distributeur à réservoir amovible, selon l'invention;
- la figure 2 est une vue en perspective du réservoir et du mécanisme de verrouillage et de confirmation de présence du réservoir selon un premier mode de réalisation de l'invention, le boîtier du distributeur étant enlevé pour plus de clarté;
- la figure 3 montre une coupe de la partie supérieure de la machine à café avec le réservoir en place à l'intérieur du distributeur;
- la figure 4 est une vue en perspective du réservoir et du mécanisme de verrouillage et de confirmation de présence du réservoir selon un deuxième mode de réalisation de l'invention, le boîtier du distributeur étant enlevé pour plus de clarté.

Le distributeur de produit pulvérulent sera décrit dans ce qui suit dans le cadre d'une machine à café automatique, le produit pulvérulent distribué étant alors du café moulu. Une machine à café intégrant un distributeur de produit pulvérulent selon l'invention comporte les éléments connus rencontrés sur cette catégorie de machines et peut incorporer les spécificités décrites dans le document WO 9912457 pour ce qui concerne le dispositif de tassage de la mouture de café dans la chambre d'infusion et pour l'éjection des galettes de marc. Une telle machine est notamment apte à assurer la température adéquate de l'eau amenée dans la chambre d'infusion et capable de réaliser le compactage de la mouture à l'intérieur de la chambre d'infusion. Le café obtenu après l'infusion du café moulu dans la chambre est évacué à l'extérieur de la machine dans un récipient collecteur, tel que par exemple décrit dans le document WO 9912456.

Le distributeur de produit pulvérulent décrit comporte par ailleurs des moyens de dosage, notamment un moyeu entraînant en rotation des pales de dosage permettant de délivrer des quantités définies de café moulu, ces moyens comportant des éléments connus et pouvant incorporer les spécificités décrites dans le document FR 2 713 906.

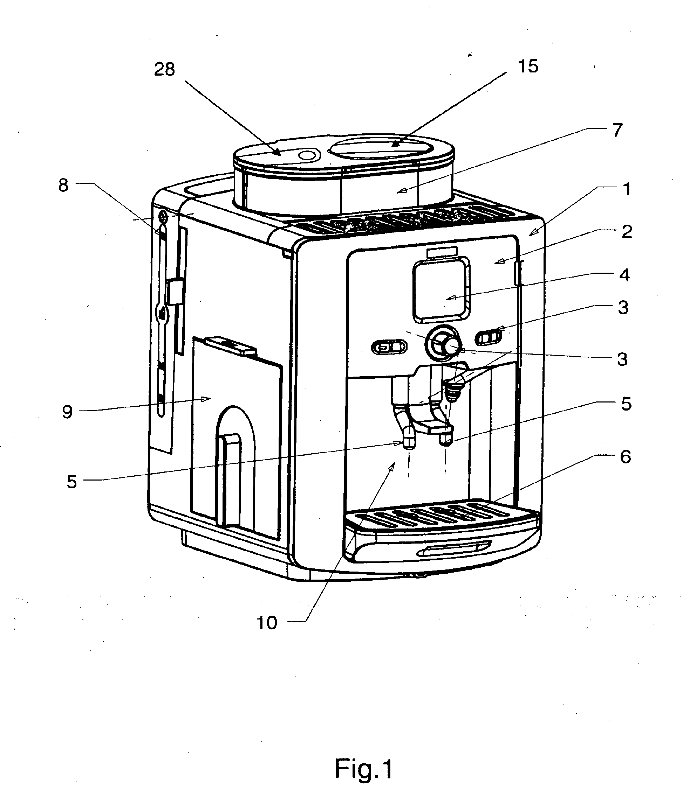

Une machine à café comportant le distributeur de l'invention est représentée sur la figure 1, où on remarque une coque externe 1 de la machine avec une face avant 2 et une face interne 10, laquelle face avant comportant des boutons de commande 3 et un afficheur 4 pour présenter les informations destinées aux utilisateurs lors du fonctionnement de la machine. Les buses 5 délivrant le café espresso sont situées dans l'espace intérieur de la machine, au-dessus d'une grille 6 et d'un réceptacle accueillant le café ou l'eau en excès. La machine à café espresso dispose par ailleurs d'un réservoir d'eau 8. Un bac récupérateur 9, accessible depuis une face latérale de la machine, permet l'évacuation des galettes de marc éjectées depuis la chambre d'infusion.

Une telle machine espresso est capable de délivrer de nombreuses tasses de café au cours de plusieurs cycles de préparation sans que l'utilisateur ait à intervenir pour approvisionner du café, de l'eau ou à éliminer le marc à la suite de chaque infusion.

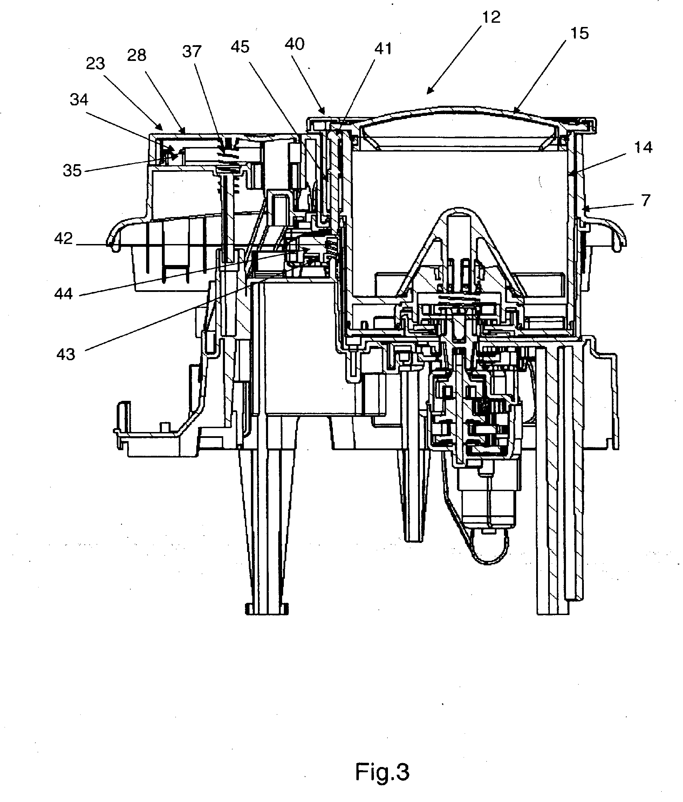

La partie supérieure de la machine comporte un distributeur 12 à réservoir amovible 14 (fig. 3) pour la mouture de café; ce réservoir et les moyens de verrouillage et de confirmation de présence dudit réservoir selon l'invention sont incorporés dans un compartiment protégé par un boîtier 7.

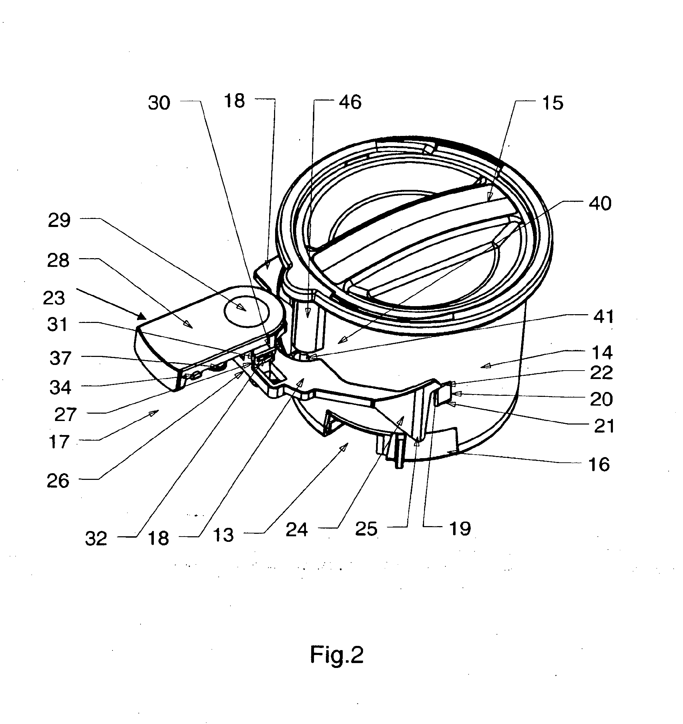

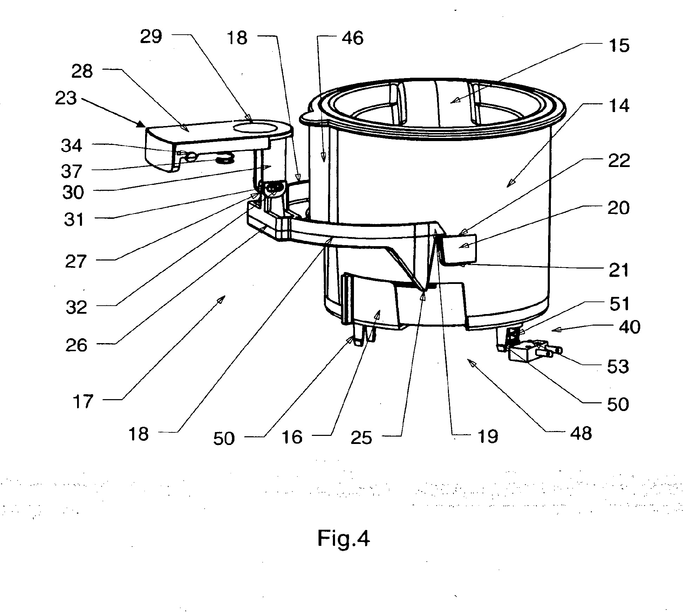

Sur les figures 2 et 4, le boîtier 7 a été enlevé pour montrer les pièces essentielles des moyens de verrouillage 17. Le distributeur 12 de café moulu comporte un réservoir 14 de forme générale cylindrique comportant un orifice de distribution 13 en sa partie inférieure et un dispositif d'obturation de cet orifice moyennant un volet 16. Le réservoir 14 et le boîtier 7 peuvent comprendre un mécanisme pour ouvrir automatiquement le volet 16, tel que décrit dans le document FR 06 05346 au nom de la demanderesse.

En référence aux figures 2 et 4, on observe les moyens de verrouillage 17 de l'invention qui comprennent deux bras horizontaux 18 reliés ensemble, entourant le réservoir 14 et placés sur un côté de ce dernier. Chaque bras horizontal 18 se termine par un crochet 19 destiné à coopérer avec une protubérance 20 située sur la surface latérale du réservoir 14. Chaque crochet 19 se prolonge verticalement vers le bas par une jupe 24 triangulaire comportant, au niveau de la surface interne de sa pointe 25, un ergot cylindrique amené à tourner dans des orifices cylindriques correspondants prévus à cet effet à l'intérieur du boîtier 7. Les ergots se trouvent sur un même axe horizontal de pivotement des bras 18.

Les deux bras horizontaux 18 forment une fourche 26 se terminant par un renvoi vertical 27. La fourche 26 est reliée à l'extrémité de son renvoi vertical 27 à un levier externe 23 d'actionnement des moyens de verrouillage 17. Dans l'exemple représenté aux figures, le levier externe 23 est une pédale d'éjection 28 qui a une forme générale en L comportant un méplat 29 horizontal d'appui prolongé vers le bas par une bride 30 verticale d'attache au renvoi vertical 27 de la fourche 26. La bride 30 comporte deux pattes parallèles verticales comportant chacune une fente oblongue 31 horizontale permettant le coulissement d'un ergot 32 formé à l'extrémité supérieure du renvoi vertical 27.

Plus particulièrement en référence à la figure 3, on observe que la pédale d'éjection 28 comporte, à l'extrémité avant de son méplat 29, deux protubérances latérales 34 de forme cylindrique supportées en pivotement dans des oreilles 35 de forme correspondante à l'intérieur du boîtier 7. Le pivotement de la pédale d'éjection 28 s'effectue en exerçant manuellement une pression sur le méplat 29 à l'encontre de la force d'un ressort de rappel 37 qui est, dans les exemples représentés, un ressort de compression dont une extrémité est fixée au boîtier 7 et l'autre au levier externe 23.

En référence aux figures 2 et 4, on remarque la forme particulière des protubérances 20 comportant chacune une extrémité inférieure d'insertion 21 et une extrémité supérieure d'appui 22. L'extrémité inférieure d'insertion 21 présente une arrête arrondie ou un chanfrein facilitant l'introduction du réservoir, notamment le contact de la protubérance 20 avec le crochet 19. L'extrémité d'appui 22 présente, elle, une surface horizontale plane permettant à l'extrémité plane du crochet 19 d'y prendre place correctement lors du verrouillage du réservoir 14.

Ainsi, lors de la mise en place du réservoir 14 par translation verticale dans son logement à l'intérieur du boîtier 7, les protubérances 20 écartent les crochets 19 des moyens de verrouillage 17 qui suivent le contour des protubérances 20. Dès que les crochets arrivent en la partie supérieure des protubérances 20, ils reviennent en position initiale en s'installant sur l'extrémité d'appui 22 des protubérances 20, sous la poussée du ressort 37 de la pédale d'éjection 28. Pour libérer le réservoir, l'utilisateur appuie sur la pédale d'éjection 28, ce qui comprime le ressort 37 et fait pivoter les bras 18 libérant ainsi les crochets 19 du contact des protubérances 20. L'utilisateur peut maintenant extraire le réservoir du boîtier 7 du distributeur.

Selon l'invention également, le distributeur comporte des moyens de confirmation 40 de la présence du réservoir amovible 14 à l'intérieur d'un logement prévu à cet effet dans le boîtier 7. Dans l'exemple représenté aux figures 2 et 3, les moyens de confirmation 40 comportent une tige 41 portée par le réservoir 14, alors que dans l'exemple représenté à la figure 4, ils comportent un pion 50 porté par le boîtier 7, la tige 41 et le pion 50 étant susceptibles de venir actionner, lorsqu'il se déplacent en translation vers le bas, un interrupteur 43, respectivement 53, relié au circuit électrique de la machine.

La figure 3 montre plus particulièrement la partie supérieure de la machine à café, notamment le boîtier 7 dans un logement duquel se trouve le réservoir amovible 14 fermé par un couvercle 15, ainsi que les moyens de confirmation 40 de la présence dudit réservoir 14, le couvercle 15 étant représenté en position verrouillée par rapport au réservoir. Selon l'exemple de la figure 3, la confirmation de la présence du réservoir amovible 14 est réalisée au moyen de la tige 41 portée par le réservoir 14 lui-même. La tige 41 est placée sur la périphérie dudit réservoir et sur sa partie externe, dans un logement 45 permettant uniquement une mobilité verticale. Dans une version avantageuse de l'invention, la tige 41 est mobile avec le couvercle 15 et est en position basse uniquement lorsque le couvercle 15 est correctement verrouillé sur le réservoir 14.

La confirmation de la présence du réservoir amovible 14 fermé par son couvercle 15 nécessite au moins un interrupteur 43 fonctionnant selon la position de la tige 41 pour avertir de la présence du réservoir et/ou autoriser ou interdire le démarrage de la machine à café. Cet interrupteur 43 est relié à la carte électronique de commande de la machine à café et à l'afficheur 4.

Divers micro-interrupteurs et circuits électroniques sont connus pour réaliser cette opération et permettre le déclenchement d'une alarme et/ou d'un affichage d'information en direction de l'utilisateur de la machine à café et ils ne seront pas décrits plus en détail.

L'interrupteur 43 fonctionne par l'intermédiaire d'une pédale 44, montée moyennant un ressort de rappel 42, dont la position est directement corrélée à celle de la tige 41. La position basse de la tige 41 correspond à la possibilité de démarrage de la machine à café et à une première position de la pédale 44, et la position haute de la tige 41 à un avertissement (voyant allumé au niveau de l'afficheur) et/ou à une interdiction de démarrage, et à une deuxième position de la pédale 44. La pédale 44 fonctionne en basculement autour d'un axe de rotation horizontal, perpendiculaire à l'axe de la tige 41, entre deux positions.

Une telle sécurité peut avantageusement être reliée à un indicateur sonore fonctionnant comme alarme ou/et à l'afficheur pour indiquer à l'utilisateur le problème.

Dans un deuxième mode de réalisation de l'invention mieux visible à la figure 4, le dispositif de confirmation de la présence du réservoir 14 comporte un interrupteur 53 porté par le boîtier 7 comportant une languette de contact actionnée par un pion 50. Le pion 50 est monté mobile en coulissement vertical, à l'encontre d'un ressort de compression 51, à l'intérieur du boîtier 7, en étant déplacé par le poids du réservoir 14 lorsqu'il est mis en place dans son logement prévu à l'intérieur du boîtier 7.

De manière avantageuse dans ce mode de réalisation, le boîtier 7 comporte deux pions 50 diamétralement opposés montés coulissants au fond du logement de réception du réservoir 14 et formant un dispositif d'éjection 48. En l'absence du réservoir 14, les pions 50 poussés chacun par un ressort de rappel 51 font saillie verticalement à travers des orifices prévus au fond du logement de réception du réservoir 14 dans le boîtier 7. Lors de la mise en place du réservoir dans son logement à l'intérieur du boîtier 7, le fond du réservoir vient s'installer sur les pions 50, ces derniers étant repoussés vers le bas par le poids du réservoir 14. Par ailleurs, lors de sa descente, l'un des pions 50 vient pousser latéralement une languette élastique de l'interrupteur 53 fermant ses contacts et transmettant ainsi à la carte électronique de la machine l'information relative à la présence du réservoir mis en place dans le boîtier 7. Le réservoir 14 est par ailleurs automatiquement verrouillé lors de sa mise en place par les moyens de verrouillage 17. Lors du déverrouillage, après appui sur la pédale d'éjection 28, le crochet 19 des moyens de verrouillage 17 est rendu inactif, et les pions 50, sous l'effet de leur ressort 51, poussent le réservoir 14 vers le haut en le soulevant d'environ 5 mm facilitant par la suite sa préhension par l'utilisateur en vue de son extraction.

Le réservoir 14 comporte une saillie longitudinale 46 permettant l'indexation du réservoir par rapport à son logement de réception à l'intérieur du boîtier 7, lequel logement a une forme et des dimensions proches de celles du contour du réservoir permettant son introduction facile, avec jeu, en partie supérieure du boîtier 7.

En fonctionnement, l'utilisateur commence par mettre en place le réservoir 14 en l'introduisant en la partie supérieure du boîtier 7 dans une position prédéterminée, aidé par la saillie longitudinale 46. Les moyens de verrouillage 17 permettent de fixer le réservoir 14 par rapport au boîtier, l'utilisateur n'ayant qu'à le pousser vers le bas jusqu'à ce que le réservoir 14 arrive en butée dans son logement du boîtier 7. Ainsi, lors de la descente du réservoir dans son logement, les protubérances 20 écartent les crochets 19 et permettent à la tige 41 ou au pion 50 d'actionner les contacts de l'interrupteur 43, respectivement de l'interrupteur 53, confirmant ainsi que le réservoir 14 est correctement mis en place à l'intérieur du boîtier 7. Une fois le réservoir 14 arrivé en butée au fond de son logement, les crochets 19 du dispositif de verrouillage reviennent en position pour verrouiller le réservoir 14 en se plaçant au-dessus des protubérances 20 sous la poussée du ressort 37 de la pédale d'éjection 28. Dans cette position verrouillée, l'interrupteur 43, respectivement 53, indique à la machine la présence du réservoir 14, de sorte que la machine est ainsi prête à confectionner des cafés. Lorsqu'il veut extraire le réservoir 14 en vue de son remplacement, nettoyage ou remplissage, l'utilisateur doit appuyer sur la pédale d'éjection 28, les crochets 19 libérant les protubérances 20 et permettant son extraction par l'utilisateur. L'interrupteur 43 ou 53 n'étant plus actionné, l'afficheur 4 de la machine indique par un témoin lumineux (ou indication écrite, voire même un témoin auditif) l'absence du réservoir 14.

D'autres variantes et modes de réalisation de l'invention peuvent être envisagés sans sortir du cadre de ses revendications.

Ainsi, on pourrait utiliser un dispositif électromécanique comportant par exemple une tige d'actionnement d'un bouton de commande d'un électroaimant qui, lors de la mise en place du réservoir dans le boîtier de la machine, permettrait de pousser latéralement une mâchoire pour verrouiller le réservoir tout en transmettant en même temps à la machine l'information de présence du réservoir.

## Revendications

1. Distributeur de produit pulvérulent comportant un boîtier (7), un réservoir (14) monté amovible dans un logement réalisé dans le boîtier (7), ledit réservoir contenant le produit pulvérulent et ayant un orifice de distribution (13), ledit distributeur comprenant des moyens de verrouillage (17) associés à des moyens de confirmation (40) de la mise en place correcte du réservoir (14) par translation verticale à l'intérieur d'un logement ouvert du boîtier, **caractérisé en ce que** les moyens de confirmation (40) actionnent un interrupteur (43,53) de commande du fonctionnement et **en ce que** ledit distributeur comprend des moyens de déverrouillage actionnés depuis l'extérieur du boîtier.

2. Distributeur selon la revendication 1, **caractérisé en ce que** les moyens de verrouillage sont des moyens à enclenchement automatique coopérant avec des éléments de forme situés sur le côté du réservoir.

3. Distributeur selon l'une des revendications 1 à 2, **caractérisé en ce que** les moyens de verrouillage (17) comportent au moins un crochet (19) et le réservoir (14) comporte au moins un élément de forme à enclenchement rapide venant en prise avec le crochet (19) qui bloque le réservoir (14) lors de sa mise en place dans le logement et **en ce que** le crochet (19) est rendu inactif par actionnement d'un levier externe (23).

4. Distributeur selon la revendication 3, **caractérisé en ce que** le réservoir (14) est mis en place par translation verticale à l'intérieur du logement ouvert en la partie supérieure du boîtier (7) et le levier externe (23) est agencé proche du réservoir (14) du même côté du boîtier (7).

5. Distributeur selon l'une des revendications 3 ou 4, **caractérisé en ce que** l'élément de forme à enclenchement rapide est une protubérance (20) comportant une paroi latérale saillante par rapport à la surface latérale du réservoir délimitée entre une extrémité inférieure d'insertion (21) et une extrémité supérieure d'appui (22) et que le verrouillage s'effectue sous la poussée d'un moyen de rappel élastique.

6. Distributeur selon lune des revendications 3 à 5, **caractérisé en ce que** le crochet (19) est supporté en pivotement autour d'un axe horizontal.

7. Distributeur selon l'une des revendications 5 ou 6, **caractérisé en ce que** le crochet (19) coopère avec l'extrémité supérieure d'appui (22) de la protubérance (20) et se prolonge par un bras horizontal (18) comportant une extrémité à renvoi vertical (27).

8. Distributeur selon la revendication 7, **caractérisé en ce que** le réservoir (14) comporte deux protubérances (20) diamétralement opposées coopérant avec deux crochets (19) dont les bras horizontaux (18) sont reliés ensemble et comportent un renvoi vertical (27) commun.

9. Distributeur selon la revendication 8, **caractérisé en ce que** l'extrémité du renvoi vertical (27) est reliée à une pédale d'éjection (28) montée pivotante autour d'un axe horizontal situé en la partie supérieure du boîtier (7).

10. Distributeur selon l'une des revendications précédentes, **caractérisé en ce que** les moyens de confirmation (40) comportent une tige (41) portée par le réservoir (14) venant actionner un interrupteur (43) de commande du fonctionnement.

11. Distributeur selon l'une des revendications précédentes, **caractérisé en ce que** le réservoir (14) comporte des moyens d'indexation en position par rapport au logement du boîtier (7).

12. Distributeur selon l'une des revendications précédentes, **caractérisé en ce qu'**il comporte un dispositif d'éjection (48) du réservoir (14).

13. Distributeur selon la revendication 12, **caractérisé en ce que** le dispositif d'éjection (48) comprend au moins un pion (50) d'éjection monté à ressort de rappel (51) au fond du logement du boîtier (7) et venant au contact du fond du réservoir (14) lorsque ce dernier est mis en place dans le boîtier (7).

14. Distributeur selon la revendication 13, **caractérisé en ce que** ledit pion (50) d'éjection agit sur un interrupteur (53) de commande du fonctionnement.

15. Machine automatique de préparation des boissons, **caractérisée en ce qu'**elle comporte un distributeur de produit pulvérulent selon l'une des revendications précédentes.

## Patentansprüche

1. Spender für pulverförmiges Produkt mit einem Gehäuse (7) und einem Behälter (14), der abnehmbar in einer in dem Gehäuse (7) ausgebildeten Aufnahme montiert ist, wobei der genannte Behälter das pulverförmige Produkt enthält und eine Ausgabeöffnung (13) aufweist, wobei der genannte Spender Verriegelungsmittel (17) aufweist, die Mitteln (40) zur Bestätigung des richtigen Einsetzens des Behälters (14) durch senkrechtes Einschieben in eine offene Aufnahme des Gehäuses zugeordnet sind, **dadurch gekennzeichnet, dass** die Bestätigungsmittel (40) einen Schalter (43, 53) zur Steuerung des Betriebs betätigen und dass der genannte Spender von der Außenseite des Gehäuses betätigte Entriegelungsmittel umfasst.

2. Spender nach Anspruch 1, **dadurch gekennzeichnet, dass** die Verriegelungsmittel automatisch einrastende Mittel sind, die mit an der Seite des Behälters befindlichen Formelementen zusammenwirken.

3. Spender nach einem der Ansprüche 1 bis 2, **dadurch gekennzeichnet, dass** die Verriegelungsmittel (17) zumindest einen Haken (19) umfassen und der Behälter (14) zumindest ein schnell einrastendes Formelement umfasst, das mit dem Haken (19) in Eingriff kommt, der den Behälter (14) beim Einsetzen in die Aufnahme blockiert, und dass der Haken (19) durch die Betätigung eines externen Hebels (23) unwirksam wird.

4. Spender nach Anspruch 3, **dadurch gekennzeichnet, dass** der Behälter (14) durch senkrechtes Einschieben in die im oberen Teil des Gehäuses (7) befindliche, offene Aufnahme eingesetzt wird und sich der externe Hebel (23) nahe dem Behälter (14) auf der gleichen Seite des Gehäuses (7) befindet.

5. Spender nach einem der Ansprüche 3 oder 4, **dadurch gekennzeichnet, dass** das schnell einrastende Formelement ein Vorsprung (20) ist, der eine in Bezug auf die Seitenfläche des Behälters vorspringende Seitenwand umfasst, die zwischen einem unteren Ende (21) zum Einführen und einem oberen Ende (22) zum Abstützen begrenzt ist, und **dadurch gekennzeichnet, dass** die Verriegelung unter dem Druck auf ein elastisches Rückstellelement erfolgt.

6. Spender nach einem der Ansprüche 3 bis 5, **dadurch gekennzeichnet, dass** der Haken (19) um eine horizontale Achse schwenkbar gelagert ist.

7. Spender nach einem der Ansprüche 5 oder 6, **dadurch gekennzeichnet, dass** der Haken (19) mit dem oberen Ende (22) zum Abstützen des Vorsprungs (20) zusammenwirkt und sich in einem horizontalen Arm (18) fortsetzt, der ein vertikal umgelenktes Ende (27) aufweist.

8. Spender nach Anspruch 7, **dadurch gekennzeichnet, dass** der Behälter (14) zwei diametral gegenüberliegende Vorsprünge (20) aufweist, die mit zwei Haken (19) zusammenwirken, deren horizontale Arme (18) miteinander verbunden sind und eine gemeinsame vertikale Umlenkung (27) aufweisen.

9. Spender nach Anspruch 8, **dadurch gekennzeichnet, dass** das vertikal umgelenkte Ende (27) mit einer Auswurftaste (28) verbunden ist, die um eine horizontale, im oberen Teil des Gehäuses (7) befindliche Achse schwenkbar montiert ist.

10. Spender nach einem der vorhergehenden Ansprüche, **dadurch gekennzeichnet, dass** die Bestätigungsmittel (40) einen von dem Behälter (14) getragenen Stift (41) aufweisen, der einen Schalter (43) zur Steuerung des Betriebs betätigt.

11. Spender nach einem der vorhergehenden Ansprüche, **dadurch gekennzeichnet, dass** der Behälter (14) Mittel zur Indexierung der Position in Bezug auf die Aufnahme des Gehäuses (7) aufweist.

12. Spender nach einem der vorhergehenden Ansprüche, **dadurch gekennzeichnet, dass** er eine Vorrichtung (48) zum Auswerfen des Behälters (14) aufweist.

13. Spender nach Anspruch 12, **dadurch gekennzeichnet, dass** die Vorrichtung (48) zum Auswerfen zumindest einen Auswurfbolzen (50) umfasst, der mit einer Rückstellfeder (51) am Boden der Aufnahme des Gehäuses (7) befestigt ist und mit dem Boden des Behälters (14) in Kontakt kommt, wenn letzterer in das Gehäuse (7) eingesetzt wird.

14. Spender nach Anspruch 13, **dadurch gekennzeichnet, dass** der genannte Auswurfbolzen (50) auf einen Schalter (53) zur Steuerung des Betriebs wirkt.

15. Automat zur Zubereitung von Getränken, **dadurch gekennzeichnet, dass** er einen Spender für pulverförmiges Produkt nach einem der vorhergehenden Ansprüche aufweist.

## Claims

1. Powder dispenser including a box (7), a tank (14) removably mounted in a housing formed in the box (7), said tank containing the powder and having a dispensing orifice (13), said dispenser comprising locking means (17) associated with means (40) for confirming the correct positioning of the tank (14) by vertical translation inside an open housing of the box, **characterised in that** the confirmation means (40) actuate a switch (43, 53) for controlling operation and **in that** said dispenser comprises unlocking means actuated from outside the box.

2. Dispenser according to claim 1, **characterised in that** the locking means are automatic engagement means cooperating with shape elements located on the side of the tank.

3. Dispenser according to claim 1 or 2, **characterised in that** the locking means (17) comprise at least one hook (19) and the tank (14) comprises at least one quick engagement shape element engaging with the hook (19) which blocks the tank (14) during its insertion into the housing and **in that** the hook (19) is made inactive by actuating an external lever (23).

4. Dispenser according to claim 3, **characterised in that** the tank (14) is positioned by vertical translation inside the open housing in the top of the box (7) and the external lever (23) is arranged close to the tank (14) on the same side of the box (7).

5. Dispenser according to claim 3 or 4, **characterised in that** the quick engagement shape element is a protrusion (20) having a side wall projecting out of the side surface of the tank defined between an insertion lower end (21) and a support upper end (22) and **in that** the locking takes place under the thrust of an elastic return means.

6. Dispenser according to one of claims 3 to 5, **characterised in that** the hook (19) is pivotally supported about a horizontal axis.

7. Dispenser according to claim 5 or 6, **characterised in that** the hook (19) cooperates with the support upper end (22) of the protrusion (20) and is extended by a horizontal arm (18) having a vertical return (27) at one end.

8. Dispenser according to claim 7, **characterised in that** the tank (14) has two diametrically opposed protrusions (20) cooperating with two hooks (19) whose horizontal arms (18) are connected together and comprise a common vertical return (27).

9. Dispenser according to claim 8, **characterised in that** the end of the vertical return (27) is connected to an ejection pedal (28) pivotally mounted about a horizontal axis located in the upper part of the box (7).

10. Dispenser according to one of the preceding claims, **characterised in that** the confirmation means (40) comprise a rod (41) carried by the tank (14) and actuating a switch (43) for controlling operation.

11. Dispenser according to one of the preceding claims, **characterised in that** the tank (14) comprises position indexing means relative to the housing of the box (7).

12. Dispenser according to one of the preceding claims, **characterised in that** it comprises a device (48) for ejecting the tank (14).

13. Dispenser according to claim 12, **characterised in that** the ejection device (48) comprises at least one ejection pin (50) mounted with return spring (51) at the bottom of the housing of the box (7) and touching the bottom of the tank (14) when the latter is inserted in the box (7).

14. Dispenser according to claim 13, **characterised in that** said ejection pin (50) acts on a switch (53) for controlling operation.

15. Automatic machine for preparing beverages, **characterised in that** it comprises a powder dispenser according to one of the preceding claims.
